(19)

**Europäisches Patentamt**

**European Patent Office**

**Office européen des brevets**

(11) **EP 4 546 077 B1**

(12) **EUROPEAN PATENT SPECIFICATION**

(45) Date of publication and mention
of the grant of the patent:
**14.01.2026 Bulletin 2026/03**

(21) Application number: **23206240.6**

(22) Date of filing: **26.10.2023**

(51) International Patent Classification (IPC):
*G05D 23/19* ^(2006.01)    *F24F 11/00* ^(2018.01)
*F24F 11/46* ^(2018.01)    *F24F 11/56* ^(2018.01)
*F24F 11/62* ^(2018.01)    *F24F 11/64* ^(2018.01)

(52) Cooperative Patent Classification (CPC):
**G05D 23/1934; F24F 11/00; F24F 11/46;
F24F 11/56; F24F 11/62; F24F 11/64;
G05D 23/1923;** F24F 11/63; F24F 2110/10

(54) **TEMPERATURE CONTROL SYSTEM AND METHOD**

TEMPERATURSTEUERUNGSSYSTEM UND -VERFAHREN

SYSTÈME ET PROCÉDÉ DE RÉGULATION DE TEMPÉRATURE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**30.04.2025 Bulletin 2025/18**

(73) Proprietor: **Daikin Europe N.V.
8400 Oostende (BE)**

(72) Inventors:
 • **Zareh Eshghdoust, Mehran
  8400 Oostende (BE)**
 • **Hajihoseini, Negar
  8400 Oostende (BE)**
 • **Rosich, Albert
  8400 Oostende (BE)**

 • **Vandemergel, Kristof
  8400 Oostende (BE)**
 • **Paolella, Matteo
  8400 Oostende (BE)**

(74) Representative: **Brantsandpatents bv
Pauline Van Pottelsberghelaan 24
9051 Ghent (BE)**

(56) References cited:
**US-B2- 10 794 608**

 • BECCALI MARCO ET AL: "Electrical hybrid heat
  pumps assisted by natural gas boilers: a
  review", APPLIED ENERGY, ELSEVIER SCIENCE
  PUBLISHERS, GB, vol. 322, 6 July 2022
  (2022-07-06), XP087115459, ISSN: 0306-2619,
  [retrieved on 20220706], DOI: 10.1016/
  J.APENERGY.2022.119466

EP 4 546 077 B1

## Description

## FIELD OF THE INVENTION

The present invention relates to a system for temperature control in one or more rooms, as well as a method for temperature control in one or more rooms.

## BACKGROUND

US10794608B2 discloses an air-conditioning control evaluation apparatus including a storage unit and a computing unit. The storage unit stores building information, input information, control information, a set of building models, and a candidate selection criterion. The computing unit determines an item available as input data for a building model, identifies the distribution of observed data, selects a plurality of candidate building models from the set of building models based on the available item and candidate selection criterion, estimates each parameter based on a method corresponding to the distribution, determines one building model based on a predetermined statistic calculated for the plurality of building models and the residual between estimated and observed values calculated for each of the building models, and evaluates, by use of the determined building model, energy saving and comfort for a plurality of controls to be evaluated.

US2015/108230 describes a system and method wherein heat loss is taken into account when operating a boiler. However, there is no mention of controlling a boiler and air conditioner based on the heat loss, or the optimization of an overall temperature control system, or the rules used to do so.

EP2602560 discloses a controller for controlling an air conditioner and a boiler. However, there is no mention of basing said control on a predicted heat loss of the room where an air conditioner and boiler are used. Neither does EP '560 disclose the operation or the rules for optimization of a system to govern an air conditioner and a boiler in the same rule, based on a predicted heat loss.

The present invention aims to resolve at least some of the problems and disadvantages mentioned above.

## SUMMARY OF THE INVENTION

The present invention aims to resolve at least some of the problems and disadvantages mentioned above.

To this end, the present invention relates to a system for temperature control in one or more rooms according to claim 1, as well as a method for temperature control in one or more rooms according to claim 11. Distinct embodiments are derived from the dependent claims.

According to a first aspect, the system for temperature control in one or more rooms, comprising a remote controller. A first room of said one or more rooms comprises a first temperature control unit with first characteristics regarding temperature control and a second temperature control unit with second characteristics regarding temperature control. The first temperature control unit and the second temperature control units each comprise one or more heating and/or cooling units, and the first and second characteristics are mutually different. The remote controller is connected to the first temperature control unit and second temperature control unit. The remote controller comprises:

     a. an acquisition section, configured to acquire, at predetermined time intervals, indoor temperature data from at least one indoor temperature sensor in said first room and outdoor temperature data from at least one outdoor temperature sensor or at least one external data source;
     b. a storage section, configured to store the indoor temperature data acquired by the acquisition section as indoor temperature historical data and the outdoor temperature data acquired by the acquisition section as outdoor temperature historical data;
     c. an estimation section, configured to estimate a heat profile in said first room based on the indoor and outdoor temperature historical data, and based on current indoor temperature data and current outdoor temperature data, said heat profile representing the expected energy loss or gain in said first room (preferably, the heat loss or gain).

The remote controller is configured to control the said first and said second temperature control units based on the estimated heat profile in said first room and based on the first and second characteristics.

The present system provides for a functional way to firstly build a heat profile for a first room based on the indoor temperature historical data and outdoor temperature historical data, along with the current indoor and outdoor temperature data. The heat profile is aimed at identifying the projected temperature change in the first room (as a result of heat loss/heat gain in the first room), such that in a second step, the remote controller can control the (first and/or second) temperature control units in the first room. Controlling the temperature control units can mean activating, deactivating, or simply increasing or decreasing their effect (increasing or decreasing heat input to or heat removal from said first room).

In order to ensure a reliable heat profile, the system requires sufficient data points to model the room's heat characteristics (such as natural exchange of heat with environment, influence of temperature difference with environment, impact of temperature control units, impact of presence of users, impact of presence/operation of objects and/or other features).

As such, a dedicated acquisition section is provided for acquiring indoor temperature data via one or more indoor temperature sensors. These indoor temperature sensors can be integrated in (a local component of) the remote controller, and/or in the temperature control units, and/or via separate sensors from which the acquisition can collect the indoor temperature data. In the case of multiple indoor temperature sensors, an averaging step can be performed to determine a single value (arithmetic mean, geometric mean, harmonic mean, median, mode, mid-range, as well as other types of averages, optionally with filtering steps to remove discrepant values).

In the same fashion, the acquisition section acquires outdoor temperature data from outdoor temperature sensors and/or at least one external data sources. As before, the outdoor temperature sensors can be integrated in (an exterior component of) the remote controller, and/or in (exterior parts of) the temperature control units, and/or via separate outdoor sensors from which the acquisition can collect the outdoor temperature data. The external data sources can for instance be temperature applications, internet sources, etc.

As before, in the case of multiple outdoor temperature sensors and/or external data sources, an averaging step can be performed to determine a single value.

The temperature data is typically periodically acquired. The periods between acquisitions can range between 1 second, 10 seconds, 30 seconds, 1 minute, 5 minutes, 30 minutes, 1 hour, 2 hours, 3 hours, or even 6 hours, 12 hours, etc. Preferably, the period is kept relatively low to account for sudden temperature changes and the diurnal cycle, without needlessly storing too much data.

The temperature data is typically acquired at the same time for indoor and outdoor temperature data and coupled as such.

These acquired indoor and outdoor temperature data (points) are stored in the storage section in order to create an indoor and outdoor temperature historical data (set). The indoor and outdoor temperature historical data preferably only takes into account data points over a preceding time period with a predetermined length, so as to ignore data points in the far past that may no longer be relevant, for instance due to changes in infrastructure (isolation), environmental factors and/or others. Based on the heat profile, the remote controller then proceeds to control the temperature control units based on their characteristics.

The advantage lies in the combination of a more accurate estimation - prediction - of the heat profile in the first room, and by actively and individually controlling the temperature control units to influence the actual heat profile, in order to correct, counter, adjust or even assist (for instance, speeding up the heat exchange to arrive at an estimated equilibrium) the natural course of the estimated heat profile.

In order to ensure that the heat profile is up to date, it is re-estimated regularly, preferably at fixed intervals, to account for changes in the environment, in the (first) room, to characteristics pertaining to the room, etc. Regenerating the heat profile can for instance be performed every minute, every 2 minutes, every 5 minutes, every 10 minutes, every 20 minutes, every 30 minutes, every hour, every 2 hours, every 3 hours, every 6 hours or longer periods of time. The heat profile is then usually estimated based on a more recent subset of indoor and outdoor temperature historical data, which may or may not partly overlap with the subset used for the previously estimated heat profile.

In an embodiment, the heat profile is estimated by the following formula or model: $\dot{T}_{room} = f_{energy}(T_{room}, T_{out})$. In this formula, $\dot{T}_{room}$ is a derivative of the indoor temperature ($T_{room}$) in said first room, and $f_{energy}$ is a function of the indoor temperature ($T_{room}$) in said first room and the outdoor temperature ($T_{out}$). The variable factors that are most relevant for heat loss and again, in the absence of (operational) temperature control units, are the temperature inside and outside, as the difference therebetween strongly determines any heat transfer.

In a preferred embodiment, the formula or model for estimating the heat profile is defined based on the indoor temperature historical data and the outdoor temperature historical data. By building the model or model based on the historical data, it does not need to be theoretically built, as this would require a substantial knowledge of the room boundaries (materials, thickness, etc.) in order to arrive at an acceptable model. Instead, by using actual historical data, the formula or model can be approximated very accurately. Furthermore, it can be easily adapted in case of changes to the room which could impact its thermal characteristics (new windows for instance), by using a newer set of historical data and generating a new model or formula. Finally, such a model or formula can be expanded upon by inclusion of the impact of temperature control units, which can be modelled accurately and easily.

In a preferred embodiment, the formula or model for estimate the heat profile is based on the following equation:

$$\dot{T}_{room} = \frac{1}{C}\left(\frac{T_{out} - T_{room}}{R} + E_{h1} + E_{h2}\right),$$

$C$ represents a thermal capacity of said first room, $T_{room}$ represents the indoor temperature of the first room, $T_{out}$ represents an current outdoor temperature, $R$ represents a thermal resistance between the first room and the environment outside of said first room, $E_{h1}$ represents the energy delivered to or removed from said first room by the first temperature control unit, and $E_{h2}$ represents the energy delivered to or removed from said first room by the second temperature control unit. With energy, reference is made to the energy that is of course actually converted to heat, excluding energy used for general operation of the units or energy loss due to inefficient conversion of energy used by the units into heat. These two delivered/removed energies are typically easily derivable from (known) specifications on the temperature control units. *C* and *R* are derived from the indoor temperature historical data and the outdoor temperature historical data.

Using the aforementioned equation allows for a simple, but very accurate representation of the thermal characteristics of the first room, which can be easily determined even based on a limited sample set of indoor and outdoor historical temperature data. The number of factors that needs to be determined is only two (*C* and *R*) in the basic equation. In some cases, the energy delivered or removed by one or more of the temperature control units is not known, but again, this can be easily inferred based on the historical temperature data, especially if further information is available such as the operational status of the units at the time of the data points in the historical temperature data.

It should furthermore be noted that the energy delivered/removed from the room can be in the form of a function or model, defined by characteristics of the temperature control unit (rise time, fall time, maximal output, etc.).

According to the invention, the remote controller further comprises a determination section configured to determine an operational status of the first and second temperature control unit based on the indoor and outdoor temperature historical data stored in the storage section. The storage section is further configured to store pre-learned data about dynamics of change of the indoor temperature data in said first room under influence of operation of the first temperature control unit, of the second temperature control unit and of the first and second temperature control unit. The estimation section is further configured to estimate the heat profile in the first room by using the operational status and said pre-learned data stored in the storage section. As mentioned earlier, the operational status of the temperature control units impacts the model or formula. As such, in cases where the remote controller does not receive this operational status directly or indirectly ('officially'), for instance for legacy temperature control units, the system can be taught or trained to infer the operational status based on the indoor and outdoor temperature historical data, recognizing discrepancies of expected values over time, which can be linked to one or more of the temperature control units being operational. Of course, in many cases, the remote controller is configured for receiving the operational status from the temperature control units or an intermediary, without needing to infer the status.

The system furthermore stores the pre-learned data about dynamics of change of the indoor temperature data, which it can also use to later on identify the operational status of the temperature control units. However, the main importance of this lies in that the model or formula can be upgraded with a very accurate representation of the influence of the temperature control units if operational, allowing the heat profile to be estimated very accurately, taking into account the influence of the temperature control units.

The operational status of the temperature control units can be re-evaluated periodically, for instance every minute, every 2 minutes, every 5 minutes, every 10 minutes, every 20 minutes, every 30 minutes, every hour, every 2 hours, every 3 hours, etc. This re-evaluation can be performed based on a more recent subset of indoor and outdoor temperature historical data, which may or may not partly overlap with the subset used for the previous evaluation of the operational status.

In a preferred embodiment, the pre-learned data about dynamics of change is provided for each temperature control unit separately, as well as for each subset of two and more of the temperature control units, as the latter may sometimes differ from the addition of the dynamics of change of the separate temperature control units. In a particularly preferred embodiment, the pre-learned data about dynamics of change can be determined via Machine Learning.

Preferably, the dynamics of change provide for a profile over a predefined period of time, this way being able to represent the impact of the temperature control units on the heat/temperature in the first room over a certain time. This can be interesting as often, different temperature control units provide/reduce heat at a different regime (faster rise to a maximal output for instance).

In a further preferred embodiment, the heat profile is estimated by the following formula or model: $\dot{T}_{room} = f_{energy}(T_{room}, T_{out}, U(t), M(U))$.

Herein, $\dot{T}_{room}$ is a derivative of the indoor temperature ($T_{room}$) in said first room, U represents which of the first and second temperature control unit has an active operational status, $M(U)$ represents the pre-learned data about dynamics of change of the indoor temperature data in said first room under influence of operation of active temperature control unit(s) $U$, and $U(t)$ represents the influence of operation of the active temperature control unit(s), and is estimated by the function or model: $U(t) = f_{energysource}(U, T_{room})$. U(t) in this sense preferably equals $E_{h1}+E_{h2}$ as a linear addition, with $E_{h1}$ being the energy delivered to or removed from said first room by the first temperature control unit (or the energy (typically, heat) exchange function for the first temperature control unit with respect to the first room), and $E_{h2}$ being the energy delivered to or removed from said first room by the second temperature control unit (or the energy (typically, heat) exchange function for the second temperature control unit with respect to the first room). In the presence of further temperature control units, the function can be easily expanded.

As mentioned previously, including the temperature control unit impact in the function improves the formula or model by making it more directly usable, resulting in a direct estimation of the temperature change over time.

In a preferred embodiment, $M(U)$ is an offline trained, offline trained online regulated or online trained formula or model.

In a preferred embodiment, $f_{energy}$ is an offline trained, offline trained online regulated or online trained formula or model.

In a preferred embodiment, $f_{energysource}$ is an offline trained, offline trained online regulated or online trained formula or model.

In a particularly preferred embodiment, $M(U)$ is formulated via Machine Learning.

The use of Machine Learning in the present context is particularly valuable, due to the abundance of data points that can be taken and stored, and used for training the model, making the models more accurate and robust, and being suitable for acting in any relevant new situation.

In a preferred embodiment, the remote controller further includes a work operating section configured to control each of the first and second temperature control unit based on a preset temperature in the first room and wherein said work operating section is configured for activating or deactivating the first and/or second temperature control unit based on the estimated heat profile in the first room and according to a user-definable comfort setting regarding a desired speed of temperature adjustment by the activation or deactivation of the first and/or second temperature control unit.

More and more, there is a need for smart control of devices and systems which are capable of quickly recognizing situations and patterns, predicting events, etc., and accurately acting upon this. In temperature control, one of these applications is recognition of patterns. In many cases whether residential, industrial or commercial, the mode of operation for temperature control units is periodical. Taking the example of residential use, whether the period is daily or weekly, many people have their set routines of waking up at a similar time as in a previous period, using certain rooms (bathroom, kitchen, etc.), and leaving the house for work; returning home and again performing certain actions (cooking, cleaning, showering, watching television, exercising, etc.) and a similar bed time. Often, the user sets certain presets in their system (for instance, start heating the bathroom X minutes before they plan to take a shower) for the system to follow.

As such, via access to the historical data, the system can start to develop improved operational routines, taking into account the preset temperatures on the one hand and the actual temperature data on the other hand. For instance, in case the temperature in the bathroom is much lower than it was in a previous period, or the outside temperature is much lower, it may start heating the bathroom earlier, or heat it faster, to arrive at the desired temperature.

Similarly, the system takes into account the user-definable comfort setting to more efficiently achieve desired setpoints (preset temperature for instance). Most applicable in that context is a user's desire for a quicker or slower temperature adjustment (for instance, in the morning a faster heating of the bathroom is desirable due to urgency, while when coming home, the heating of the living quarters may be more gradual).

The preset temperatures can be part of a manually set schedule for operation of the temperature control units, or it can be an outline for which the system then proceeds to build its own schedule, with the preset temperatures as goals. In this context, Machine Learning once more becomes very relevant to quickly and accurately adapt to situational changes, so as to achieve the desired preset temperatures, under the comfort settings, without fail.

Finally, in light of the above, the system is configured for automatically determining which of the temperature control units is to be activated/deactivated, along with the 'level' of activation (heat output/removal). For this, it can take into account the characteristics of the temperature control units (speed, maximal output, rise time, etc.), and choose the optimal path. This furthermore typically depends on the situation itself, for instance the desired temperature increase/decrease, as well as other factors.

In a preferred embodiment, the remote controller further includes a work operating section configured to control at least one heat source unit based on a preset temperature in the first room and wherein said work operating section is configured for activating or deactivating said heat source unit based on the estimated heat profile in the first room, wherein said heat source unit is configured to heat a heating medium supplied to at least one of the first and second temperature control unit.

In a preferred embodiment, the first and second temperature control unit are powered by different energy sources, preferably electric and gas, and wherein the work operating section is further configured to activate or deactivate depending on cost estimate data provided from external source based on prices of said different energy sources. Using further information, such as the price, or even availability, can further optimize the system, making sure it is operable at any given time, without being reliant on external factors.

In the present document, the term "energy source" should be construed as referring to the energy source from which energy is converted to the thermal energy that is (directly or indirectly) used for heating the (first) room, or the energy source which is used for removing heat from the (first) room.

For instance, in the case of a water circuit, the water is heated by an energy source (for instance, gas), and subsequently circulated by another means, such as an electric water pump. In such a case, the electricity used to power the water pump should not be considered as the energy source, unless it would represent a substantial part of the total energy used to heat and circulate the water, in which case they can be considered as a mixed-type energy source with the applicable ratio, and treated as such in terms of price as well. In most cases, the impact of such a secondary energy source will be minor, and can be ignored without substantially changing the overall situation.

In this, the energy source should be considered separate from the temperature control unit itself, which can itself generate or remove heat via a different principle (radiation, convection, etc.), by converting the thermal energy that was converted from the energy of the energy source again.

In some embodiments, the energy sources can be one of the following: gas, solar energy, coal, wood, geothermal, fuel (in its different varieties), wind, hydropower, biomass, etc.

In a preferred embodiment, at least one of the first and second temperature control unit is an electric temperature control unit (with electricity being the energy source), and preferably an electric heating unit, wherein the remote controller controls the first and second temperature control unit further taking into account renewable energy sources available to the first and/or second temperature control unit. In such a case, the system can take into consideration the availability of a renewable energy source, and will leverage this as a contributing factor for electing the use (or the primary use) of the electric temperature control unit, due to the availability of (free) energy that could go to waste otherwise (as storage is not always an option), thus reducing impact on the environment as well as reducing cost for the user.

The above is also applicable to cases where there is no electric temperature control unit, but to a lesser extent, as it will often not directly favor any of the temperature control units, and will depend on the type of renewable energy source.

In a preferred embodiment, the storage section is configured to store the indoor temperature data and the outdoor temperature data at most once every 1s over at least 24 h. This can be done less often, without substantially impacting the relevance of the temperature data, and instead can make it more manageable, by reducing superfluous data points.

Equally, the length of time over which data points are stored can be increased to build a more robust model, that can identify long-term patterns (for instance, weekday versus weekend, seasonal, etc.).

In an alternatively preferred embodiment, the storage section is configured to store the indoor temperature data and the outdoor temperature data at least once every 1s over at least 24 h.

In a preferred embodiment, the first temperature control unit is a gas-powered temperature control unit, preferably a radiator unit, and the second temperature control unit is an electricity-powered temperature control unit, preferably an air conditioner unit. Gas-powered and electricity-powered refers to the energy source used for originally generating the thermal energy used for (directly or indirectly) heating or the energy used for cooling the room. The above two types are the most common types of temperature control units, while also often having starkly different characteristics in terms of temperature control (speed, output, but also less tangible factors such as 'feel' for the user).

In a preferred embodiment, the first temperature control unit and/or the second temperature control unit comprise a plurality of spatially separated subunits. As mentioned earlier, in some cases a room can hold multiple subunits for heating and/or cooling, which will also impact the characteristics, the dynamics of change, and will be relevant in terms of interaction with the user-definable comfort settings.

In a preferred embodiment, a second room of said one or more rooms comprises a first temperature control unit with first characteristics and a second temperature control unit with second characteristics, wherein said first and second characteristics are mutually different, which remote controller is connected to said first temperature control unit of the second room and second temperature control unit of the second room. The acquisition section is further configured to acquire, at predetermined time intervals, indoor temperature data from at least one indoor temperature sensor in said second room. The storage section is further configured to store the indoor temperature data of the second room acquired by the acquisition section as indoor temperature historical data of said second room. The estimation section is further configured to estimate a heat profile in said second room based on the indoor temperature historical data of the second room and the outdoor temperature historical data, and further based on current indoor temperature data in the second room and current outdoor temperature data. The remote controller is configured to control said first and said second temperature control units of said second room based on the estimated heat profile in said second room and based on the first and second characteristics of the first and second temperature control units of the second room.

The expansion of the base concept for a first room to account for a second room, or for (multiple) other rooms, is self-explanatory. We note that this is applicable to each of the previously mentioned as well as following embodiments described.

In a particular embodiment, the system allows for separate preset temperature in the different rooms, and thus for separate control of the temperature control units based on the preset temperatures.

In a preferred embodiment, the first and second temperature control units are first and second heating units. Heating is typically available via multiple methods/systems, especially in residential units, as opposed to cooling, for which there is usually only one option available (if any). The heating options are usually much more variable as well, in terms of speed, maximal output, 'feel' and other characteristics, thus providing for a more complex puzzle in terms of user-definable comfort settings, preset temperatures, energy availability/price, etc.

According to a second aspect, the invention relates to a method for temperature control in one or more rooms, wherein a first room of said one or more rooms comprises a first temperature control unit with first characteristics and a second temperature control unit with second characteristics, wherein said first and second characteristics are mutually different, comprising the following steps:

a. acquiring, at predetermined time intervals, indoor temperature data from at least one indoor temperature sensor in said first room and outdoor temperature data from at least one outdoor temperature sensor or at least one external data source;
b. storing the acquired indoor temperature data as indoor temperature historical data and the acquired outdoor temperature data as outdoor temperature historical data;
c. estimating a heat profile in said first room based on the indoor and outdoor temperature historical data, and based on current indoor temperature data and current outdoor temperature data, said heat profile representing the expected energy loss or gain in said first room (preferably the heat loss or gain);
d. controlling said first and said second temperature control units based on the estimated heat profile in said first room and based on the first and second characteristics.

The advantages mentioned for the system according to the invention are equally applicable to the above method. Furthermore, it should be noted that any embodiments mentioned for the system are equally transferable as embodiments for the method, and should be considered as implicitly disclosed herein.

In an embodiment, estimating the heat loss is according to the following formula or model: $\dot{T}_{room} = f_{energy}(T_{room}, T_{out})$, wherein $\dot{T}_{room}$ is a derivative of the indoor temperature ($T_{room}$) in said first room, and $f_{energy}$ is a function of the dynamics of change of the indoor temperature data ($T_{room}$) in said first room and the outdoor temperature ($T_{out}$). The variable factors that are most relevant for heat loss and gain, in the absence of (operational) temperature control units, are the temperature inside and outside, as the difference therebetween strongly determines any heat transfer. In an embodiment, estimating the heat profile is performed according to a formula or model which is defined based on the indoor temperature historical data and the outdoor temperature historical data. By building the model or model based on the historical data, it does not need to be theoretically built, as this would require a substantial knowledge of the room boundaries (materials, thickness, etc.) in order to arrive at an acceptable model. Instead, by using actual historical data, the formula or model can be approximated very accurately. Furthermore, it can be easily adapted in case of changes to the room which could impact its thermal characteristics (new windows for instance), by using a newer set of historical data and generating a new model or formula. Finally, such a model or formula can be expanded upon by inclusion of the impact of temperature control units, which can be modelled accurately and easily.

According to the invention, the method further comprises the following steps:

determining an operational status of the first and second temperature control unit based on the stored indoor and outdoor temperature historical data;
storing pre-learned data about dynamics of change of the indoor temperature data in said first room under influence of operation of the first temperature control unit, of the second temperature control unit and of the first and second temperature control unit.

Estimating the heat profile in the first room uses the determined operational status and the stored pre-learned data.

As mentioned earlier, the operational status of the temperature control units impacts the heat profile. As such, in cases where the operational status is not directly or indirectly ('officially') available, for instance for legacy temperature control units, the model can be taught or trained to infer the operational status based on the indoor and outdoor temperature historical data, recognizing discrepancies of expected values over time, which can be linked to one or more of the temperature control units being operational. Of course, in many cases, the operational status is automatically received from the temperature control units or an intermediary, without needing to infer the status.

The method furthermore comprises the step of storing the pre-learned data about dynamics of change of the indoor temperature data, which it can also use to later on identify the operational status of the temperature control units. However, the main importance of this lies in that the model or formula can be upgraded with a very accurate representation of the influence of the temperature control units if operational, allowing the heat profile to be estimated very accurately, taking into account the influence of the temperature control units.

In a preferred embodiment, the pre-learned data about dynamics of change is provided for each temperature control unit separately, as well as for each subset of two and more of the temperature control units, as the latter may sometimes differ from the addition of the dynamics of change of the separate temperature control units. In a particularly preferred embodiment, the pre-learned data about dynamics of change can be determined via Machine Learning.

Preferably, the dynamics of change provide for a profile over a predefined period of time, this way being able to represent the impact of the temperature control units on the heat/temperature in the first room over a certain time. This can be interesting as often, different temperature control units provide/reduce heat at a different regime (faster rise to a maximal output for instance).

In an embodiment, the step of estimating the heat profile is according to the following formula or model:

$\dot{T}_{room} = f_{energy}(T_{room}, T_{out}, U(t), M(U))$. Herein, $\dot{T}_{room}$ is a derivative of the indoor temperature ($T_{room}$) in said first room, U represents which of the first and second temperature control unit has an active operational status, $M(U)$ represents the pre-learned data about dynamics of change of the indoor temperature data in said first room under influence of operation of active temperature control unit(s) $U$, and $U(t)$ represents the influence of operation of the active temperature control unit(s), and is estimated by the function or model: $U(t) = f_{energysource}(U, T_{room})$. As mentioned previously, including the temperature control unit impact in the function improves the formula or model by making it more directly usable, resulting in a direct estimation of the temperature change over time.

In a preferred embodiment, $M(U)$ is an offline trained, offline trained online regulated or online trained formula or model.

In a preferred embodiment, $f_{energy}$ is an offline trained, offline trained online regulated or online trained formula or model.

In a preferred embodiment, $f_{energysource}$ is an offline trained, offline trained online regulated or online trained formula or model.

In a particularly preferred embodiment, $M(U)$ is formulated via Machine Learning.

In an embodiment, the first and second temperature control unit are powered by different energy sources, preferably electric and gas, and wherein the work operating section is further configured to activate or deactivate depending on cost estimate data provided from external source based on prices of said different energy sources. Using further information, such as the price, or even availability, can further optimize the method, making sure it is operable at any given time, without being reliant on external factors.

In this, the energy source should be considered separate from the temperature control unit itself, which can itself generate or remove heat via a different principle (radiation, convection, etc.), by converting the thermal energy that was converted from the energy of the energy source again.

In some embodiments, the energy sources can be one of the following: gas, solar energy, coal, wood, geothermal, fuel (in its different varieties), wind, hydropower, biomass, etc.

## DESCRIPTION OF FIGURES

**Fig. 1** shows a graph representing the indoor temperature for a first room in the past, as well as a desired preset temperature regime (setpoint) for an upcoming period of time in the future, a predicted indoor temperature under an optimal control of the temperature control units in the future, as well as an optimal action plan in the future, according to an embodiment of the invention.

**Fig. 2** shows a flow chart for the method according to an embodiment of the invention, for generating a heat profile model for a plurality of rooms.

**Fig. 3** shows a flow chart for a further embodiment of the method according to an embodiment of the invention, for controlling the temperature control units based on the heat profile.

**Fig. 4** shows an overall process flow for an embodiment of the system and method of the invention.

## DETAILED DESCRIPTION OF THE INVENTION

The invention is further described by the following non-limiting examples which further illustrate the invention, and are not intended to, nor should they be interpreted to, limit the scope of the invention.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"Heat profile" for a room or location as used herein refers to a projected quantity or amount of heat for said room or location over one or more points in time in the future, or can be described as the difference in said quantity/amount of heat with respect to an established (measured or assumed) heat quantity in the present or past, and can thus represent the heat loss/gain (or lack thereof even) with respect to said established heat quantity. The heat profile is typically derived from a model or formula that is built on previous data points, knowledge about factors that influence the heat quantity (heating/cooling units, outside temperature, heat capacity of the room/location, insulation, etc.).

"Temperature control unit" as used herein refers one or more (same-type, jointly operated) units suitable for heating and/or cooling a room or location. The method of cooling and heating can vary, and can amongst others take the form of introduction of heated or cooled air (or another medium), via thermal radiation (radiator/convector), and others.

"First characteristics" and "second characteristics" refer to operational characteristics for the temperature control of the temperature control units, comprising at least one of the type of heating/cooling or the energy source used for generating heat or removing heat (gas, electric, solar, etc.). Further characteristics can be included, such as number of units, position of units, maximal heat output/removal, coefficient of performance, speed of heating/cooling (speed with which a desired heat output or heat removal is achieved), etc.

"Room" as used herein, refers to a largely spatially separated volume, which is substantially sealed from its surroundings by heat-insulating physical barriers, such as walls, windows, doors, etc. The qualifier "first" or "second" or any other, is merely to differentiate between the rooms, but any statements or embodiments that are described regarding a first room, are equally applicable to any other room.

"User-definable comfort setting" refers to a setting that allows a user to describe a desired heating or cooling operation to be followed (actuated) by the temperature control units. This can include such features as desired type of heating/cooling, desired speed of heating/cooling, etc. The setting may or may not comprise several separate protocols which are applicable to different situations and can be activated depending on meeting specific requirements to identify the different situations (such as temperature, time of day, date, location, user presence, user identity, cost of energy, urgency, etc.).

"Pre-learned data (about dynamics of change of the indoor temperature data in a room/location)" as used herein refers to characterizing data regarding influence of operation of a temperature control unit in a room/location. This pre-learned data is typically continually improved and expanded upon, for instance via training a Machine Learning model with measured data (indoor and outdoor temperature data, along with time stamps) to better describe this influence. The pre-learned data typically shows information on the speed with which a temperature control unit can provide or remove heat to a room/location and/or the maximal heat output/removal, but also a time profile for the temperature control unit's influence, potentially correlated to the indoor and/or outdoor temperature data, as well as other potential data (such as humidity, environmental data, human presence, heat/cold source presence, etc.).

"Indoor/outdoor temperature historical data" as used herein refers to a data set comprising a plurality of data points representing past indoor/outdoor temperature measurements, along with an associated time (relative or absolute). These measurements are preferably taken on a periodical basis, with fixed intervals, but this is not necessarily the case. The data points can be processed to remove anomalous data points, which can be rule-based. The data sets can be rolling data sets, which discard the oldest data points as new data points come in, or can cover a fixed time period (for instance, all data points of the last X hours). The indoor and outdoor temperature historical data is most preferably linked, in that each data point of one set is linked to one data point of the other set, and to an associated time (relative or absolute).

"A", "an", and "the" as used herein refers to both singular and plural referents unless the context clearly dictates otherwise. By way of example, "a compartment" refers to one or more than one compartment.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per* se, by means of further exemplification, the term encompasses *inter alia* a reference to any one of said members, or to any two or more of said members, such as, *e.g.*, any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments.

The term "acquisition section" refers to a dedicated subsection of the remote controller configured for acquiring indoor and outdoor temperature data from indoor temperature data sensors and outdoor temperature data sensors (or external data sources). This can comprise a wired or wireless communication module for communicating with the sensors (or external data source).

The term "storage section" refers to a dedicated subsection of the remote controller configured for storing the acquired indoor and outdoor temperature data, as indoor temperature historical data and outdoor historical temperature data respectively. The storage section may be provided as part of (comprised in) the remote controller (e.g., integrally formed or provided on the same chip) or provided separately, but electrically connected to the remote controller. By way of example, the storage section may comprise both volatile and non-volatile memory resources, including, for example, a working memory (e.g. a random access memory). In addition, the storage section may include an instruction store (e.g. a ROM in the form of an electrically-erasable programmable read-only memory (EEPROM) or flash memory) storing a computer program comprising computer-readable instructions which, when executed by the remote controller, cause the remote controller to perform various functions described herein.

Additionally, the storage section may be provided with further memory sections necessary to perform its function of controlling operation of the heat pump system.

The term "estimation section" refers to a dedicated subsection of the remote controller configured for estimating a heat profile in a room based on the indoor and outdoor temperature historical data, and based on current indoor temperature data and current outdoor temperature data. The estimation section as such comprises one or more processing units or modules (e.g. a central processing unit (CPU) such as a microprocessor, or a suitably programmed field programmable gate array (FPGA) or application-specific integrated circuit (ASIC)).

The term "work operating section" refers to a dedicated subsection of the remote controller configured to control operation of the temperature control unit based on a preset temperature in the room, directly or indirectly. The work operating section is configured for activating or deactivating said heat source unit (direct control) based on the estimated heat profile in the room, and/or is configured to heat a heating medium supplied to at least one of the temperature control units (indirect control). To do so, the work operating section typically comprises one or more processing units or modules (e.g. a central processing unit (CPU) such as a microprocessor, or a suitably programmed field programmable gate array (FPGA) or application-specific integrated circuit (ASIC)), which may or may not be the same as those of the estimation section.

These sections may be comprised in the remote controller, whether grouped in a central unit or hub or decentralized but (wiredly or wirelessly) connected to each other. For instance, the acquisition section may comprise several subsections which are decentralized at the sensors themselves, and communicate the acquired data from said sensors to a central storage section, which is provided in a single unit or hub along with the estimation section. The same applies to the work operating section, which may also comprise several subsections provided at the temperature control units to control the temperature control units based on input from the estimation section or other parts of the remote controller.

However, in alternative versions, each section is provided at a centralized point, with the sections communicating directly (wiredly) with each other, and wiredly or wirelessly with outside components, for instance the acquisition section with the temperature sensor(s) and the work operating section with the temperature control units.

The remote controller may be wiredly connected to the temperature control units (or subsections thereof, for instance, to a boiler or valves connecting the boiler to a radiator, but not necessarily to each subsection), and/or may be wirelessly connected to the temperature control units, with a local controller on the temperature control units (or again, subsections thereof) that communicates wirelessly with the remote controller.

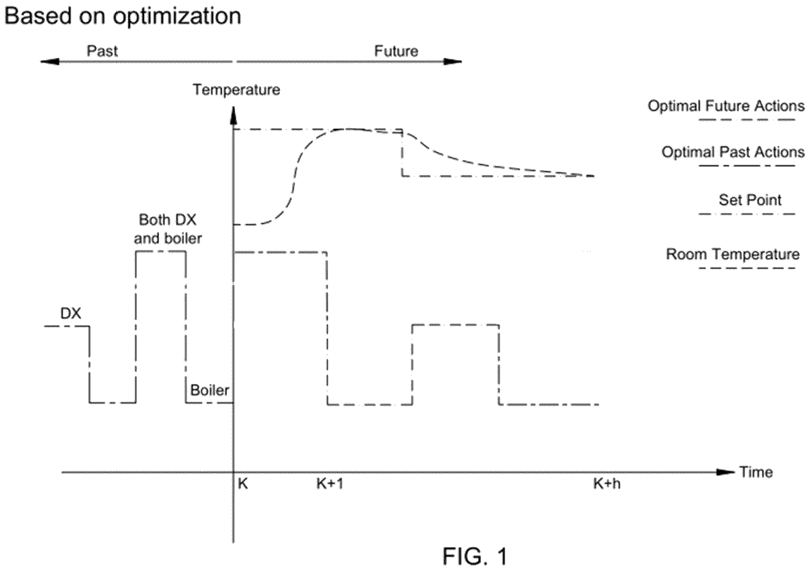

Fig. 1 shows a graphical representation of the indoor temperature in a (first) room. To the left side of the vertical axis, the indoor temperature historical data is shown measured at four previous intervals with equal length, as can be seen by the discrete profile. Further information is made available to the system controlling the temperature control units on which temperature control unit was operational at each interval. Based on this information, and the outdoor temperature historical data (not shown), a model for a temperature profile can be built, which is representative of the heat profile for the (first) room. The indoor temperature historical data set does not necessarily need to be directly preceding the present time, but can be further in the past, as it primarily is relied on to build the model, which can then receive as the input current conditions.

Fig. 1 shows on the right side a desired preset temperature, imposed by a user. Using the model built on the past data, along with the current temperature, an optimization algorithm can be used to determine the optimal action in controlling the temperature control units in order to achieve the desired preset temperature. This optimal action is then applied to generate an estimated indoor temperature at a further point in time (typically one time step further), and the optimization algorithm is then rerun with this estimated indoor temperature as the new 'current' indoor temperature, again with the desired preset temperature as a goal, to determine a new optimal action, which is applied to generate an estimated indoor temperature at yet a further point in time, with the above steps being repeated. These optimal actions are implemented and reassessed as time goes on, by comparing the actually measured indoor temperature (see graph) and the preset temperature in order to correct the optimal action if necessary. These optimal actions are also represented on the graph in discrete actions.

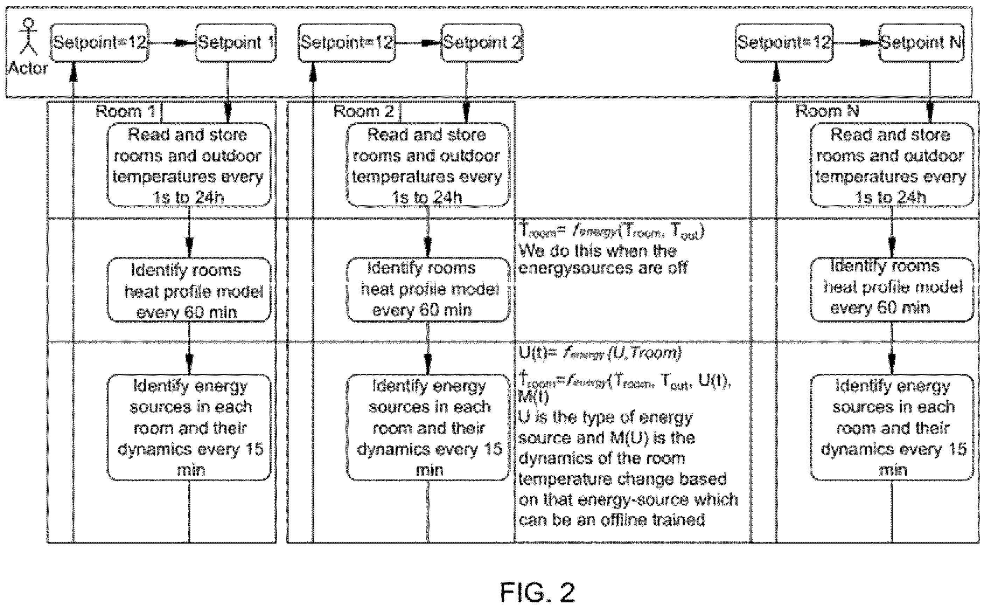

Fig. 2 shows a flow chart for temperature control in multiple rooms. For each room separately, the indoor temperature, $T_{room}$, is read (either directly measured, or measurement received from an external sensor) and stored every second for the past 24 hours, as part of the indoor temperature historical data, along with the

outdoor temperature $T_{out}$, which can be stored collectively for the rooms if possible) as part of the outdoor temperature historical data. Based on this, a heat profile is built for each room to estimate the change in temperature or heat quantity for said room (energy loss or energy gain):

$$\dot{T}_{room} = f_{energy}(T_{room}, T_{out}).$$

In the above formula, $\dot{T}_{room}$ stands for the change of the room temperature over time in absence of energy (heat) sources, and represents the heat profile for the room, with $f_{energy}$ being the formula or model that uses the current indoor temperature data and outdoor temperature data as input.

This model is identified once every hour, based on the stored indoor and outdoor temperature historical data for the past 24 hours, meaning that the 'oldest' hour of temperature measurements are discarded and replaced by the latest hour of temperature measurements.

Using the thusly built model for each room, the operational status of temperature control units is determined in each room every 15 minutes, taking into account the current indoor and outdoor temperature as a factor in the model for the room. The (pre-learned data) on dynamics (of change) for each temperature control unit can then be determined based on the knowledge of the operational status of the temperature control units, the (indoor and outdoor) temperature and the model (which implicitly includes the indoor and outdoor temperature historical data). These dynamics can be trained via offline learning, and result in the following model for the heat profile for the room:

$$\dot{T}_{room} = f_{energy}(T_{room}, T_{out}, U(t), M(U)).$$

In the above, the model is expanded by also taking into account U(t), and M(U). M(U) is the pre-learned data about dynamics of change of the indoor temperature data in said room under influence of operation of active temperature control unit(s) *U*, while U represents which of the temperature control units have an active operational status. *U(t)* represents the influence of operation of the active temperature control unit(s), and is estimated by the function or model: $U(t) = f_{energysource}$ (*U, $T_{room}$*).

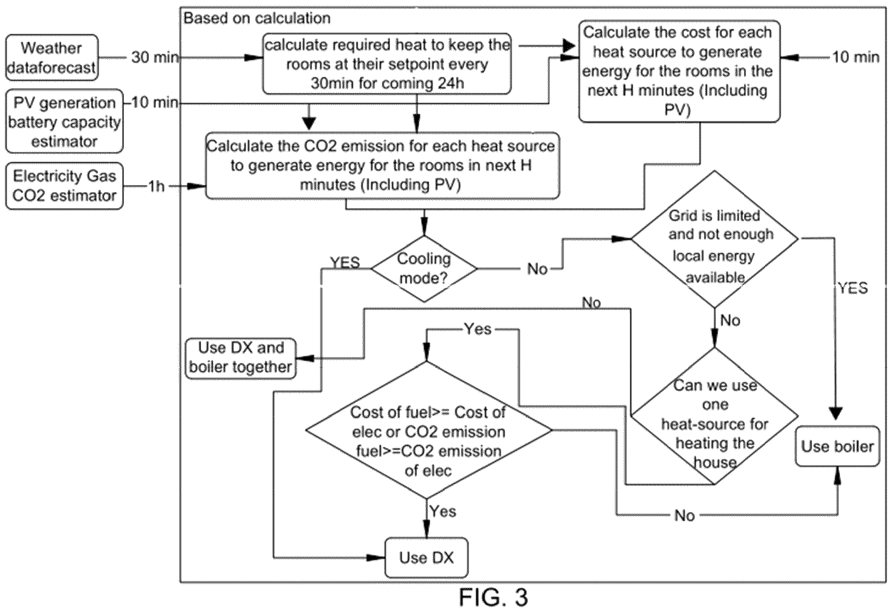

Fig. 3 shows a flow chart for controlling the temperature control units based on the heat profile. The temperature control units in this case are a gas boiler and an air conditioning apparatus (DX). The flow chart of Fig. 3 builds further upon the models and data established in Fig. 2, and further takes as input weather data or forecasts every 30 minutes, renewable energy (PV) generation and/or residential battery capacity estimations every 10 minutes, as well as estimation data of $CO_2$ production for each available energy source, in this case gas and electricity, every hour. Based on the established heat profile, along with the pre-learned data for the temperature control units, the required heat to achieve/maintain a preset temperature (setpoint) for a predefined period of time (in this case 24 hours) is calculated every 30 minutes, taking into account the weather data (which provides for the outside temperature). This required heat is then used to calculate the cost as well as the $CO_2$ production for each heating unit (or heating unit combination) to achieve/maintain the preset temperature.

The method determines whether a cooling operation is required, in which case the choice is in this case simplified, since only the air conditioning apparatus is capable thereof, and only that is activated.

In the other case, where a heating operation is required, the method determines whether or not the renewal energy generation or residential battery capacity is sufficient, in which case a next check is performed to verify whether the air conditioning apparatus and the boiler are separately sufficient to achieve/maintain the preset temperature. If so, in a next step, the cost and/or $CO_2$ production is compared, and a decision is made based thereon (for instance, cheapest or least polluting or a weighted combination of both factors). If the two temperature control units are insufficient to separately achieve/maintain the preset temperature, then they are both used, but preferably again primarily using the temperature control unit based on the comparison of cost and/or $CO_2$ production.

If there is no renewable energy/battery available and there is limited electricity available (in the sense that a - often legally required - minimal energy supply or emergency is available, sufficient for powering an ignition system and circulation pump, but not sufficient for actual heating purposes), then obviously the boiler is used for heating.

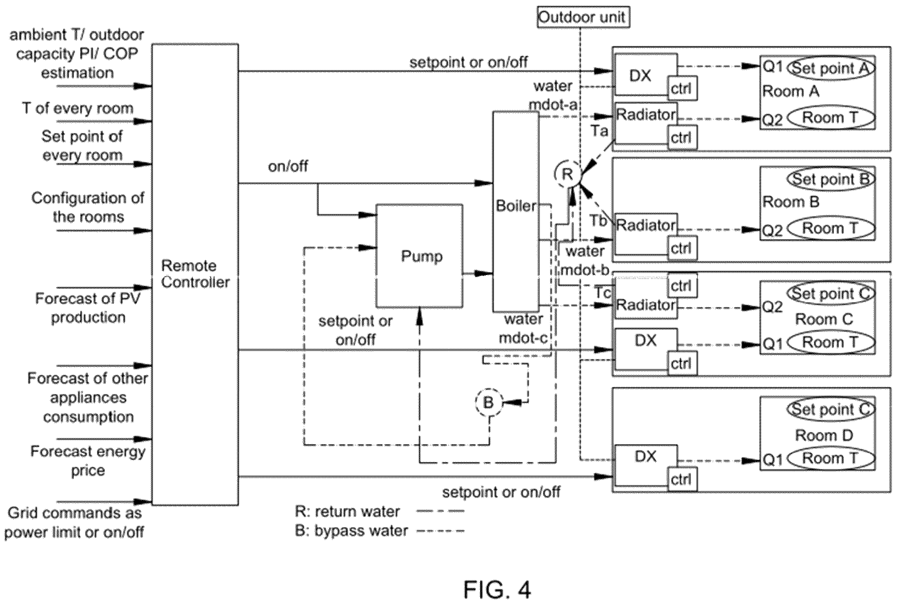

Fig. 4 shows a general overview of the system and method. The remote controller is connected to the local temperature control units (radiator and/or DX) in each of the rooms A, B, C and D, and receives the room temperature for each room, as well as the desired preset temperatures (setpoints) for each room if applicable. In this case, rooms A and C have both a radiator and a DX, while room B only has a radiator and room D only has a DX.

In this configuration, the local temperature control units are provided (or not provided) with heat (or energy to remove heat from the room, "cold") from a central source, the heat pump and the boiler, respectively providing for the DX and the radiator units.

The remote controller further receives input including ambient outdoor temperature, PV production, information on other appliances' energy consumption, energy forecast prices, grid commands (power limits, status on or off), configurations of rooms (with which internal heat exchanges can be accounted for), as well as (estimated) characteristics of the temperature control units of each room (coefficient of performance, power input, etc.).

Based on the above, the remote controller controls the heat pump and the boiler, as well as activating or deactivating the local units, in order to allow the central source to only provide for a subset of the local temperature control units, based on the indoor temperature in the room and the preset temperature for said room.

In rooms A and C the heat pump DX is used, while in room B (necessarily) only the radiator. Finally, in room D nothing is activated as the setpoint for room D is already reached. In these cases, while both of the central sources will be activated, not all of the local temperature control units will be operatively connected thereto by the remote controller, meaning that the temperature control units themselves are not activated.

In the above examples, reference is mainly made to heating units and a heating operation, but the extension of the principle to cooling operations and cooling units is clear for the skilled person.

It is supposed that the present invention is not restricted to any form of realization described previously and that some modifications can be added to the presented example of fabrication without reappraisal of the appended claims.

**Claims**

1. A system for temperature control in one or more rooms, comprising a remote controller, wherein a first room of said one or more rooms comprises a first temperature control unit with first characteristics regarding temperature control and a second temperature control unit with second characteristics regarding temperature control, said first temperature control unit and said second temperature control unit comprising one or more heating and/or cooling units, wherein said first and second characteristics are mutually different, which remote controller is electronically connected to said first temperature control unit and second temperature control unit, and the remote controller comprises:

   a. an acquisition section, configured to acquire, at predetermined time intervals, indoor temperature data from at least one indoor temperature sensor in said first room and outdoor temperature data from at least one outdoor temperature sensor or at least one external data source;
   b. a storage section, configured to store the indoor temperature data acquired by the acquisition section as indoor temperature historical data and the outdoor temperature data acquired by the acquisition section as outdoor temperature historical data;
   c. an estimation section, configured to estimate a heat profile in said first room based on the indoor and outdoor temperature historical data, and based on current indoor temperature data and current outdoor temperature data, said heat profile representing the expected energy loss or gain in said first room;
**characterized in that** said remote controller is configured to control said first and said second temperature control units based on the estimated heat profile in said first room and based on the first and second characteristics,
and **in that** the remote controller further comprises a determination section configured to determine an operational status of the first and second temperature control unit based on the indoor and outdoor temperature historical data stored in the storage section,
and **in that** the storage section is further configured to store pre-learned data about dynamics of change of the indoor temperature data in said first room under influence of operation of the first temperature control unit, of the second temperature control unit and of the first and second temperature control unit,
and **in that** said estimation section is further configured to estimate the heat profile in the first room by using the operational status and said pre-learned data stored in the storage section.

2. System for temperature control according to the preceding claim 1, **characterized in that** the heat profile is estimated by the following formula or model:
$\dot{T}_{room} = f_{energy}(T_{room}, T_{out})$, wherein

   $\dot{T}_{room}$ is a derivative of the indoor temperature ($T_{room}$) in said first room, and
   $f_{energy}$ is a function of the indoor temperature ($T_{room}$) in said first room and the outdoor temperature ($T_{out}$).

3. System for temperature control according to the preceding claim 2, wherein the formula or model for estimating the heat profile is defined based on the indoor temperature historical data and the outdoor temperature historical data.

4. System for temperature control according to any one of the preceding claims 2 to 3, wherein the formula or model for estimate the heat profile is:

$$\dot{T}room = \frac{1}{C}\left(\frac{T_{out}-T_{room}}{R} + E_{h1} + E_{h2}\right),$$

wherein $C$ represents a thermal capacity of said first room, wherein $T_{room}$ represents the indoor temperature of the first room, wherein $T_{out}$ represents an current outdoor temperature, wherein $R$ represents a thermal resistance between the first room and the environment outside of said first room, wherein $E_{h1}$ represents the energy delivered to or removed from said first room by the first temperature control unit, and wherein $E_{h2}$ represents the energy delivered to or removed from said first room by the second temperature control unit, wherein $C$ and $R$ are derived from the indoor temperature historical data and the outdoor temperature historical data.

5. System for temperature control according to any one of the preceding claims 1 to 4, **characterized in that** the heat profile is estimated by the following formula or model: $\dot{T}_{room} = f_{energy}(T_{room}, T_{out}, U(t), M(U))$ wherein:

$\dot{T}_{room}$ is a derivative of the indoor temperature ($T_{room}$) in said first room, and
U represents which of the first and second temperature control unit has an active operational status;
$M(U)$ represents the pre-learned data about dynamics of change of the indoor temperature data in said first room under influence of operation of active temperature control unit(s) $U$;
$U(t)$ represents the influence of operation of the active temperature control unit(s), and is estimated by the function or model: $U(t) = f_{energy\text{-}source}(U, T_{room})$.

6. System for temperature control according to claim 5, wherein $f_{energysource}$, $f_{energy}$, and $M(U)$ are offline trained, offline trained online regulated, or online trained formulas or models.

7. System for temperature control according to any one of the preceding claims 1 to 6, wherein the remote controller further includes a work operating section configured to control each of the first and second temperature control unit based on a preset temperature in the first room and wherein said work operating section is configured for activating or deactivating the first and/or second temperature control unit based on the estimated heat profile in the first room and according to a user-definable comfort setting regarding a desired speed of temperature adjustment by the activation or deactivation of the first and/or second temperature control unit.

8. System for temperature control according to any one of the preceding claims 1 to 7, wherein the remote controller further includes a work operating section configured to control at least one heat source unit based on a preset temperature in the first room and wherein said work operating section is configured for activating or deactivating said heat source unit based on the estimated heat profile in the first room, wherein said heat source unit is configured to heat a heating medium supplied to at least one of the first and second temperature control unit.

9. System for temperature control according to any one of the preceding claims 1 to 8, preferably wherein at least one of the first and second temperature control unit is an electric temperature control unit, wherein the remote controller is configured to control the first and second temperature control unit further taking into account renewable energy sources available to the first and/or second temperature control unit.

10. System for temperature control according to any one of the preceding claims 1 to 9, wherein a second room of said one or more rooms comprises a first temperature control unit with first characteristics and a second temperature control unit with second characteristics, wherein said first and second characteristics are mutually different, which remote controller is connected to said first temperature control unit of the second room and second temperature control unit of the second room,

wherein the acquisition section is further configured to acquire, at predetermined time intervals, indoor temperature data from at least one indoor temperature sensor in said second room;
wherein the storage section is further configured to store the indoor temperature data of the second room acquired by the acquisition section as indoor temperature historical data of said second room;
and wherein the estimation section is further configured to estimate a heat profile in said second room based on the indoor temperature historical data of the second room and the outdoor temperature historical data, and further based on current indoor temperature data in the second room and current outdoor temperature data;
and wherein said remote controller is configured to control said first and said second temperature control units of said second room based on the estimated heat profile in said second room and based on the first and second characteristics of the first and second temperature control units of the second room.

11. Method for controlling a temperature in one or more rooms, wherein a first room of said one or more rooms comprises a first temperature control unit with first characteristics and a second temperature control unit with second characteristics, wherein said first and second characteristics are mutually different, comprising the following steps:

a. acquiring, at predetermined time intervals, indoor temperature data from at least one indoor temperature sensor in said first room and outdoor temperature data from at least one outdoor temperature sensor or at least one external data source;

b. storing the acquired indoor temperature data as indoor temperature historical data and the acquired outdoor temperature data as outdoor temperature historical data;

c. estimating a heat profile in said first room based on the indoor and outdoor temperature historical data, and based on current indoor temperature data and current outdoor temperature data, said heat profile representing the expected energy loss or gain in said first room;

d. controlling said first and said second temperature control units based on the estimated heat profile in said first room and based on the first and second characteristics,

**characterized in that**, said method further comprising the following steps of: determining an operational status of the first and second temperature control unit based on the stored indoor and outdoor temperature historical data; and storing pre-learned data about dynamics of change of the indoor temperature data in said first room under influence of operation of the first temperature control unit, of the second temperature control unit and of the first and second temperature control unit; wherein estimating the heat profile in the first room uses the determined operational status and the stored pre-learned data.

12. Method according to the preceding claim 11, estimating the heat profile is performed according to a formula or model which is defined based on the indoor temperature historical data and the outdoor temperature historical data.

13. Method according to the preceding claim 11 or 12, wherein estimating the heat profile is according to the following formula or model: $\dot{T}_{room} = f_{energy}(T_{room}, T_{out}, U(t), M(U))$, wherein:

$\dot{T}_{room}$ is a derivative of the indoor temperature ($T_{room}$) in said first room, and
$U$ represents which of the first and second temperature control unit has an active operational status;
M(U) represents the pre-learned data about dynamics of change of the indoor temperature data in said first room under influence of operation of active temperature control unit(s) $U$;
U(t) represents the influence of operation of the active temperature control unit(s), and is estimated by the function or model: $U(t) = f_{energy\text{-}source}(U, T_{room})$.

**Patentansprüche**

1. System zur Temperatursteuerung in einem oder mehreren Räumen, eine Fernsteuerung umfassend, wobei ein erster Raum des einen oder der mehreren Räume eine erste Temperatursteuereinheit mit ersten Eigenschaften bezüglich der Temperatursteuerung und eine zweite Temperatursteuereinheit mit zweiten Eigenschaften bezüglich der Temperatursteuerung umfasst, wobei die erste Temperatursteuereinheit und die zweite Temperatursteuereinheit eine oder mehreren Heiz- und/oder Kühleinheiten umfassen, wobei sich die ersten und die zweiten Eigenschaften voneinander unterscheiden, wobei die Fernsteuerung elektronisch mit der ersten Temperatursteuereinheit und der zweiten Temperatursteuereinheit verbunden ist und die erste Fernsteuerung Folgendes umfasst:

a. einen Erfassungsabschnitt, der dafür konfiguriert ist, in festgelegten Zeitintervallen Innentemperaturdaten von mindestens einem Innentemperatursensor in dem ersten Raum und Außentemperaturdaten von mindestens einem Außentemperatursensor oder mindestens einer externen Datenquelle zu erfassen;

b. einen Speicherabschnitt, der dafür konfiguriert ist, die von dem Erfassungsabschnitt erfassten Innentemperaturdaten als historische Innentemperaturdaten und die von dem Erfassungsabschnitt erfassten Außentemperaturdaten als historische Außentemperaturdaten zu speichern;

c. einen Schätzabschnitt, der dafür konfiguriert ist, basierend auf den historischen Innen- und der Außentemperaturdaten und basierend auf aktuellen Innentemperaturdaten und aktuellen Außentemperaturdaten ein Wärmeprofil in dem ersten Raum zu schätzen, wobei das Wärmeprofil den erwarteten Energieverlust oder -gewinn in dem ersten Raum darstellt;

**dadurch gekennzeichnet dass** die Fernsteuerung dafür konfiguriert ist, die erste und die zweite Temperatursteuereinheit basierend auf dem geschätzten Wärmeprofil in dem ersten Raum und basierend auf den ersten und den zweiten Eigenschaften zu steuern,

und dadurch, dass die Fernsteuerung ferner einen Bestimmungsabschnitt umfasst, der dafür konfiguriert ist, basierend auf den im Speicherabschnitt gespeicherten historischen Innen- und Außentemperaturdaten einen Betriebsstatus der ersten und der zweiten Temperatursteuereinheit zu bestimmen,

und dadurch, dass der Speicherabschnitt ferner dafür konfiguriert ist, vorab erlernte Daten über die Dynamik einer Veränderung der Innentemperaturdaten in dem ersten Raum unter Einfluss des Betriebes der ersten Temperatursteuereinheit, der zweiten Temperatursteuereinheit und der ersten und der zweiten Temperatursteuereinheit zu speichern,

und dadurch, dass der Schätzabschnitt ferner dafür konfiguriert ist, das Wärmeprofil in dem ersten Raum unter Verwendung des Betriebsstatus und der in dem Speicherabschnitt gespeicherten vorab erlernten Daten zu schätzen.

2. System zur Temperatursteuerung nach dem vorhergehenden Anspruch 1, **dadurch gekennzeichnet, dass** das Wärmeprofil mit der folgenden Formel oder dem folgenden Modell geschätzt wird: $\dot{T}_{room}$ = $f_{energy}(T_{room}, T_{out})$, wobei

$\dot{T}_{room}$ eine Ableitung der Innentemperatur ($\dot{T}_{room}$) in dem ersten Raum ist und $f_{energy}$ eine Funktion der Innentemperatur ($\dot{T}_{room}$) in dem ersten Raum und der Außentemperatur ($T_{out}$) ist.

3. System zur Temperatursteuerung nach dem vorhergehenden Anspruch 2, wobei die Formel oder das Modell zum Schätzen des Wärmeprofils basierend auf den historischen Innentemperaturdaten und den historischen Außentemperaturdaten definiert ist.

4. System zur Temperatursteuerung nach einem der vorhergehenden Ansprüche 2 bis 3, wobei die Formel oder das Modell zum Schätzen des Wärmeprofils wie folgt lautet:

$$\dot{T}\text{room} = \frac{1}{C}\left( \frac{T_{out} - T_{room}}{R} + E_{h1} + E_{h2} \right),$$

wobei C eine Wärmekapazität des ersten Raums darstellt, wobei $\dot{T}_{room}$ die Innentemperatur des ersten Raums darstellt, wobei $T_{out}$ eine aktuelle Außentemperatur darstellt, wobei $R$ einen Wärmewiderstand zwischen dem ersten Raum und der Umgebung außerhalb des ersten Raums darstellt, wobei $E_{h1}$ die Energie darstellt, die dem ersten Raum durch die erste Temperatursteuereinheit zugeführt oder aus diesem entfernt wird, und wobei $E_{h2}$ die Energie darstellt, die dem ersten Raum durch die zweite Temperatursteuereinheit zugeführt oder aus diesem entfernt wird, wobei $C$ und $R$ von den historischen Innentemperaturdaten und den historischen Außentemperaturdaten abgeleitet sind.

5. System zur Temperatursteuerung nach einem der vorhergehenden Ansprüche 1 bis 4, **dadurch gekennzeichnet dass** das Wärmeprofil mit der folgenden Formel oder dem folgenden Modell geschätzt wird: $\dot{T}_{room}$ = $f_{energy}(T_{room}, T_{out}, U(t), M(U))$ wobei:

$\dot{T}_{room}$ eine Ableitung der Innentemperatur ($\dot{T}_{room}$) in dem ersten Raum ist, und U darstellt welche der ersten und der zweiten Temperatursteuereinheit sich in einem aktiven Betriebsstatus befindet;

$M(U)$ die vorab erlernten Daten über die Dynamik der Veränderung der Innentemperaturdaten in dem ersten Raum unter dem Einfluss des Betriebes einer oder mehrerer aktiver Temperatursteuereinheiten U darstellt;

$U(t)$ den Einfluss des Betriebes der einen oder mehreren aktiven Temperatursteuereinheiten darstellt und mit der Funktion oder dem Modell: $U(t) = f_{energysource}(U, T_{room})$.geschätzt wird.

6. System zur Temperatursteuerung nach Anspruch 5, wobei $f_{energysource}$, $f_{energy}$ und $M(U)$ offline trainierte, offline trainierte online regulierte oder online trainierte Formeln oder Modelle sind.

7. System zur Temperatursteuerung nach einem der vorhergehenden Ansprüche 1 bis 6, wobei die Fernsteuerung ferner einen Arbeitsbetriebsabschnitt umfasst, der dafür konfiguriert ist, jeweils die erste und die zweite Temperatursteuereinheit basierend auf einer voreingestellten Temperatur in dem ersten Raum zu steuern, und wobei der Arbeitsbetriebsabschnitt dafür konfiguriert ist, die erste und/oder die zweite Temperatursteuereinheit basierend auf dem geschätzten Wärmeprofil in dem ersten Raum und gemäß einer vom Benbutzer definierbaren Komforteinstellung bezüglich einer gewünschten Geschwindigkeit der Temperaturjustierung durch das Aktivieren oder Deaktivieren der ersten und/oder der zweiten Temperatursteuereinheit zu aktivieren oder zu deaktivieren.

8. System zur Temperatursteuerung nach einem der vorhergehenden Ansprüche 1 bis 7, wobei die Fernsteuerung ferner einen Arbeitsbetriebsabschnitt umfasst, der dafür konfiguriert ist, mindestens eine Wärmequelleneinheit basierend auf einer voreingestellten Temperatur in dem ersten Raum zu steuern und wobei der Arbeitsbetriebsabschnitt dafür konfiguriert ist, die Wärmequelleneinheit basierend auf dem geschätzten Wärmeprofil in dem ersten Raum zu aktivieren oder zu deaktivieren, wobei die Wärmequelleneinheit dafür konfiguriert ist, ein Wärmemedium zu erwärmen, das mindestens einer der ersten und der zweiten Temperatursteuereinheit zugeführt wird.

9. System zur Temperatursteuerung nach einem der vorhergehenden Ansprüche 1 bis 8, wobei vorzugsweise mindestens eine der ersten und der zweiten Temperatursteuereinheit eine elektrische Temperatursteuereinheit ist, wobei die Fernsteuerung dafür konfiguriert ist, die erste und die zweite Temperatursteuereinheit ferner unter Berücksichtigung von Quellen für erneuerbare Energie zu steuern, die der ersten und/oder der zweiten Temperatursteuereinheit zur Verfügung stehen.

**10.** System zur Temperatursteuerung nach einem der vorhergehenden Ansprüche 1 bis 9, wobei ein zweiter Raum des einen oder der mehreren Räume eine erste Temperatursteuereinheit mit ersten Eigenschaften und eine zweite Temperatursteuereinheit mit zweiten Eigenschaften umfasst, wobei sich die ersten und die zweiten Eigenschaften voneinander unterscheiden, wobei die Fernsteuerung mit der ersten Temperatursteuereinheit des zweiten Raumes und der zweiten Temperatursteuereinheit des zweiten Raumes verbunden ist,

wobei der Erfassungsabschnitt ferner dafür konfiguriert ist, in festgelegten Zeitintervallen Innentemperaturdaten von mindestens einem Innentemperatursensor in dem zweiten Raum zu erfassen;

wobei der Speicherabschnitt ferner dafür konfiguriert ist, die von dem Erfassungsabschnitt erfassten Innentemperaturdaten des zweiten Raumes als historische Innentemperaturdaten zu speichern;

und wobei der Schätzabschnitt ferner dafür konfiguriert ist, basierend auf den historischen Innentemperaturdaten des zweiten Raumes und den historischen Außentemperaturdaten und ferner basierend auf aktuellen Innentemperaturdaten in dem zweiten Raum und aktuellen Außentemperaturdaten ein Wärmeprofil in dem zweiten Raum zu schätzen;

und wobei die die Fernsteuerung dafür konfiguriert ist, die erste und die zweite Temperatursteuereinheit des zweiten Raumes basierend auf dem geschätzten Wärmeprofil in dem zweiten Raum und basierend auf den ersten und den zweiten Eigenschaften der ersten und der zweiten Temperatursteuereinheit des zweiten Raumes zu steuern.

**11.** Verfahren zum Steuern einer Temperatur in einem oder mehreren Räumen, wobei ein erster Raum des einen oder der mehreren Räume eine erste Temperatursteuereinheit mit ersten Eigenschaften und eine zweite Temperatursteuereinheit mit zweiten Eigenschaften umfasst, wobei sich die ersten und die zweiten Eigenschaften voneinander unterscheiden, die folgenden Schritte umfassend:

a. Erfassen von Innentemperaturdaten von mindestens einem Innentemperatursensor in dem ersten Raum und von Außentemperaturdaten von mindestens einem Außentemperatursensor oder mindestens einer externen Datenquelle in festgelegten Zeitintervallen;

b. Speichern der erfassten Innentemperaturdaten als historische Innentemperaturdaten und der erfassten Außentemperaturdaten als historische Außentemperaturdaten;

c. Schätzen eines Wärmeprofils in dem ersten Raum basierend auf den historischen Innen- und der Außentemperaturdaten und basierend auf aktuellen Innentemperaturdaten und aktuellen Außentemperaturdaten, wobei das Wärmeprofil den erwarteten Energieverlust oder -gewinn in dem ersten Raum darstellt;

d. Steuern der ersten und der zweiten Temperatursteuereinheit basierend auf dem geschätzten Wärmeprofil in dem ersten Raum und basierend auf den ersten und zweiten Eigenschaften,

**dadurch gekennzeichnet, dass** das Verfahren ferner die folgenden Schritte umfasst: Bestimmen eines Betriebsstatus der ersten und der zweiten Temperatursteuereinheit basierend auf den gespeicherten historischen Innen- und - Außentemperaturdaten und Speichern vorab erlernter Daten über die Dynamik einer Veränderung der Innentemperaturdaten in dem ersten Raum unter Einfluss des Betriebes der ersten Temperatursteuereinheit, der zweiten Temperatursteuereinheit und der ersten und der zweiten Temperatursteuereinheit, wobei das Schätzen des Wärmeprofils in dem ersten Raum den bestimmten Betriebsstatus und die gespeicherten vorab erlernten Daten verwendet.

**12.** Verfahren nach dem vorhergehenden Anspruch 11, wobei das Schätzen des Wärmeprofils gemäß einer Formel oder einem Modell durchgeführt wird, das basierend auf den historischen Innentemperaturdaten und den historischen Außentemperaturdaten definiert wird.

**13.** Verfahren nach dem vorhergehenden Anspruch 11 oder 12, wobei das Schätzen des Wärmeprofils gemäß der folgenden Formel oder des folgenden Modells erfolgt: $\dot{T}_{room} = f_{energy}(T_{room}, T_{out}, U(t), M(U))$, wobei:

$\dot{T}_{room}$ eine Ableitung der Innentemperatur ($\dot{T}_{room}$) in dem ersten Raum ist und $U$ darstellt, welche der ersten und der zweiten Temperatursteuereinheit sich in einem aktiven Betriebsstatus befindet,

$M(U)$ die vorab erlernten Daten über die Dynamik der Veränderung der Innentemperaturdaten in dem ersten Raum unter dem Einfluss des Betriebes einer oder mehrerer aktiver Temperatursteuereinheiten $U$ darstellt,

$U(t)$ den Einfluss des Betriebes der einen oder mehreren aktiven Temperatursteuereinheiten darstellt und mit der Funktion oder dem Modell $U(t) = f_{energysource}(U, T_{room})$.geschätzt wird.

## Revendications

1. Un système de régulation de la température dans une ou plusieurs pièces, comprenant une télécommande, dans lequel une première pièce de ladite ou desdites pièces comprend un premier régulateur de température avec de premières caractéristiques concernant la régulation de la température et un second régulateur de température avec de secondes caractéristiques concernant la régulation de la température, ledit premier régulateur de température et ledit second régulateur de température comprenant une ou plusieurs unités de chauffage et/ou de refroidissement, dans lequel lesdites premières et secondes caractéristiques sont mutuellement différentes, laquelle télécommande est électroniquement connectée audit premier régulateur de température et audit second régulateur de température, et la télécommande comprend :

   a. une section d'acquisition, configurée pour acquérir, à des intervalles de temps prédéterminés, des données de température intérieure à partir d'au moins un capteur de température intérieure dans ladite première pièce et des données de température extérieure à partir d'au moins un capteur de température extérieure ou d'au moins une source de données externe ;
   b. une section de stockage, configurée pour stocker les données de température intérieure acquises par la section d'acquisition en tant que données historiques de température intérieure et les données de température extérieure acquises par la section d'acquisition en tant que données historiques de température extérieure ;
   c. une section d'estimation, configurée pour estimer un profil thermique dans ladite première pièce sur la base des données historiques de température intérieure et extérieure, et sur la base de données de température intérieure actuelles et de données de température extérieure actuelles, ledit profil thermique représentant la perte ou le gain d'énergie attendu dans ladite première pièce ;
   **caractérisé en ce que** ladite télécommande est configurée pour commander ledit premier et ledit second régulateur de température sur la base du profil thermique estimé dans ladite première pièce et sur la base des premières et secondes caractéristiques,
   et **en ce que** la télécommande comprend en outre une section de détermination configurée pour déterminer l'état de fonctionnement du premier et du second régulateur de température sur la base des données historiques de température intérieure et extérieure stockées dans la section de stockage,

   et **en ce que** la section de stockage est en outre configurée pour stocker des données préapprises sur la dynamique du changement des données de température intérieure dans la première pièce sous l'influence du fonctionnement du premier régulateur de température, du second régulateur de température et du premier et du second régulateur de température,
   et **en ce que** ladite section d'estimation est en outre configurée pour estimer le profil thermique dans la première pièce en utilisant l'état de fonctionnement et lesdites données préapprises stockées dans la section de stockage.

2. Système de régulation de la température selon la revendication précédente 1, **caractérisé en ce que** le profil thermique est estimé à l'aide de la formule ou du modèle suivant : $\dot{T}_{room}$ = f$_{energy}$(T$_{room}$, T$_{out}$), dans lequel

   $\dot{T}_{room}$ est une dérivée de la température intérieure ($T_{room}$) dans ladite première pièce, et $f_{energy}$ est une fonction de la température intérieure ($T_{room}$) dans ladite première pièce et de la température extérieure ($T_{out}$).

3. Système de régulation de la température selon la revendication précédente 2, dans lequel la formule ou le modèle d'estimation du profil thermique est défini sur la base des données historiques de température intérieure et des données historiques de température extérieure.

4. Système de régulation de la température selon l'une quelconque des revendications précédentes 2 à 3, dans lequel la formule ou le modèle d'estimation du profil thermique est :

$$\dot{T}\text{room} = \frac{1}{C}\left( \frac{T_{out} - T_{room}}{R} + E_{h1} + E_{h2} \right),$$

   dans lequel C représente une capacité thermique de la première pièce, dans lequel $T_{room}$ représente la température intérieure de la première pièce, dans lequel $T_{out}$ représente une température extérieure actuelle, dans lequel $R$ représente une résistance thermique entre la première pièce et l'environnement extérieur de ladite première pièce, dans lequel $E_{h1}$ représente l'énergie fournie à la première pièce ou retirée de celle-ci par le premier régulateur de température, et dans lequel $E_{h2}$ représente l'énergie fournie à la première pièce ou retirée de celle-ci par le second régulateur de température, dans lequel $C$ et $R$ sont dérivées des données historiques de température intérieure et des données historiques de température extérieure.

5. Système de régulation de la température selon l'une quelconque des revendications précédentes 1 à 4, **caractérisé en ce que** le profil thermique est estimé à l'aide de la formule ou du modèle suivant : $\dot{T}_{room} = f_{energy}(T_{room}, T_{out}, U(t), M(U))$ dans lequel :

$\dot{T}_{room}$ est une dérivée de la température intérieure ($T_{room}$) dans ladite première pièce, et U représente celui parmi le premier et le second régulateur de température dont l'état de fonctionnement est actif ;
M(U) représente les données préapprises sur la dynamique du changement des données de température intérieure dans ladite première pièce sous l'influence du fonctionnement du ou des régulateurs de température actif(s) U ;
U(t) représente l'influence du fonctionnement du ou des régulateurs de température actifs, et est estimée par la fonction ou le modèle : $U(t) = f_{energysource}(U, T_{room})$.

6. Système de régulation de la température selon la revendication 5, dans lequel $f_{energysource}$, $f_{energy}$, et M(U) sont des formules ou modèles entraînés hors ligne, entraînés hors ligne et régulés en ligne, ou entraînés en ligne.

7. Système de régulation de la température selon l'une quelconque des revendications précédentes 1 à 6, dans lequel la télécommande comporte en outre une section de commande de fonctionnement configurée pour commander chacun du premier et du second régulateur de température sur la base d'une température prédéfinie dans la première pièce et dans lequel ladite section de commande de fonctionnement est configurée pour activer ou désactiver le premier et/ou le second régulateur de température sur la base du profil thermique estimé dans la première pièce et en fonction d'un paramètre de confort définissable par l'utilisateur concernant une vitesse souhaitée d'ajustement de la température par l'activation ou la désactivation du premier et/ou du second régulateur de température.

8. Système de régulation de la température selon l'une quelconque des revendications précédentes 1 à 7, dans lequel la télécommande comporte en outre une section de commande de fonctionnement configurée pour commander au moins une unité de source de chaleur sur la base d'une température prédéfinie dans la première pièce et dans lequel ladite section de commande de fonctionnement est configurée pour activer ou désactiver ladite unité de source de chaleur sur la base du profil thermique estimé dans la première pièce, dans lequel ladite unité de source de chaleur est configurée pour chauffer un fluide de chauffage fourni à au moins l'un parmi le premier et le second régulateur de température.

9. Système de régulation de la température selon l'une quelconque des revendications précédentes 1 à 8, de préférence dans lequel au moins l'un parmi le premier et le second régulateur de température est un régulateur de température électrique, dans lequel la télécommande est configurée pour commander le premier et le second régulateur de température en tenant compte des sources d'énergie renouvelable disponibles pour le premier et/ou le second régulateur de température.

10. Système de régulation de la température selon l'une quelconque des revendications précédentes 1 à 9, dans lequel une seconde pièce de ladite ou desdites pièces comprend un premier régulateur de température avec de premières caractéristiques et un second régulateur de température avec de secondes caractéristiques, dans lequel lesdites premières et secondes caractéristiques sont mutuellement différentes, laquelle télécommande est connectée audit premier régulateur de température de la seconde pièce et au second régulateur de température de la seconde pièce,

dans lequel la section d'acquisition est en outre configurée pour acquérir, à des intervalles de temps prédéterminés, des données de température intérieure à partir d'au moins un capteur de température intérieure dans la seconde pièce ;
dans lequel la section de stockage est en outre configurée pour stocker les données de température intérieure de la seconde pièce acquises par la section d'acquisition en tant que données historiques de température intérieure de ladite seconde pièce ;
et dans lequel la section d'estimation est en outre configurée pour estimer un profil thermique dans ladite seconde pièce sur la base des données historiques de température intérieure de la seconde pièce et des données historiques de température extérieure, et en outre sur la base de données de température intérieure actuelles dans la seconde pièce et de données de température extérieure actuelles ;
et dans lequel ladite télécommande est configurée pour commander lesdits premier et second régulateurs de température de ladite seconde pièce sur la base du profil thermique estimé dans ladite seconde pièce et sur la base des premières et secondes caractéristiques des premier et second régulateurs de température de la seconde pièce.

11. Procédé de régulation de la température dans une ou plusieurs pièces, dans lequel une première pièce de ladite ou desdites pièces comprend un premier régulateur de température avec de premières caractéristiques et un second régulateur de température avec de secondes caractéristiques, dans lequel lesdites premières et secondes caractéristiques sont mutuellement différentes, comprenant les étapes suivantes :

a. l'acquisition, à des intervalles de temps prédéterminés, de données de température intérieure à partir d'au moins un capteur de température intérieure dans ladite première pièce et de données de température extérieure à partir d'au moins un capteur de température extérieure ou d'au moins une source de données externe ;

b. le stockage des données de température intérieure acquises en tant que données historiques de température intérieure et des données de température extérieure acquises en tant que données historiques de température extérieure ;

c. l'estimation d'un profil thermique dans ladite première pièce sur la base des données historiques de température intérieure et extérieure, et sur la base de données de température intérieure actuelles et de données de température extérieure actuelles, ledit profil thermique représentant la perte ou le gain d'énergie attendu dans ladite première pièce ;

d. la commande dudit premier et dudit second régulateur de température sur la base du profil thermique estimé dans ladite première pièce et sur la base des premières et secondes caractéristiques,

**caractérisé en ce que** ledit procédé comprend en outre les étapes suivantes consistant à : déterminer l'état de fonctionnement du premier et du second régulateur de température sur la base des données historiques de température intérieure et extérieure stockées ; et stocker des données préapprises sur la dynamique du changement des données de température intérieure dans ladite première pièce sous l'influence du fonctionnement du premier régulateur de température, du second régulateur de température et du premier et du second régulateur de température ; dans lequel l'estimation du profil thermique dans la première pièce utilise l'état de fonctionnement déterminé et les données préapprises stockées.

**12.** Procédé selon la revendication précédente 11, l'estimation du profil thermique est effectuée selon une formule ou un modèle qui est défini sur la base des données historiques de température intérieure et des données historiques de température extérieure.

**13.** Procédé selon la revendication précédente 11 ou 12, dans lequel l'estimation du profil thermique se fait selon la formule ou le modèle suivant: $\dot{T}_{room} = f_{energy}(T_{room}, T_{out}, U(t), M(U))$, dans lequel:

$\dot{T}_{room}$ est une dérivée de la température intérieure ($T_{room}$) dans ladite première pièce, et
$U$ représente celui parmi le premier et le second régulateur de température dont l'état de fonctionnement est actif ;
M(U) représente les données préapprises sur la dynamique du changement des données de température intérieure dans ladite première pièce sous l'influence du fonctionnement du ou des régulateurs de température actif(s) $U$ ;
U(t) représente l'influence du fonctionnement du ou des régulateurs de température actifs, et est estimée par la fonction ou le modèle : $U(t) = f_{energysource}(U, T_{room})$.

## Based on optimization

FIG. 1

| Room 1 | Room 2 | | Room N |
|---|---|---|---|
| Read and store rooms and outdoor temperatures every 1s to 24h | Read and store rooms and outdoor temperatures every 1s to 24h | $\dot{T}_{room}= f_{energy}(T_{room}, T_{out})$ We do this when the energysources are off | Read and store rooms and outdoor temperatures every 1s to 24h |
| Identify rooms heat profile model every 60 min | Identify rooms heat profile model every 60 min | | Identify rooms heat profile model every 60 min |
| Identify energy sources in each room and their dynamics every 15 min | Identify energy sources in each room and their dynamics every 15 min | $U(t)= f_{energy}(U,Troom)$ $\dot{T}_{room}=f_{energy}(T_{room}, T_{out}, U(t), M(t)$ U is the type of energy source and M(U) is the dynamics of the room temperature change based on that energy-source which can be an offline trained | Identify energy sources in each room and their dynamics every 15 min |

Setpoint=12 → Setpoint 1

Setpoint=12 → Setpoint 2

Setpoint=12 → Setpoint N

Actor

FIG. 2

FIG. 3

FIG. 4

EP 4 546 077 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10794608 B2
- US 2015108230 A
- EP 2602560 A